# EUROPEAN PATENT APPLICATION

(11) **EP 0 571 666 A1**
(43) Date of publication of application: **01.12.1993**
(21) Application number: 92201540.9
(22) Date of filing: 27.05.1992
(51) Int. Cl.: B65D 63/10, B29C 45/00

(54) **Bundling strap and method for manufacturing the strap in a continuous assembly**

(71) Applicant: Kakihashi, Takao, Matsudo-shi, Chiba-ken (JP)
(72) Inventor: Kakihashi, Takao, Matsudo-shi, Chiba-ken (JP)
(74) Representative: de Bruijn, Leendert C.

(57) **Abstract**

The invention relates to a continuous assembly of bundling straps in which a plurality of straps are used to bind a plurality of wires or used such that straps per se are tied to branches of a fruit tree are continuous to each other. The invention also relates to a method of manufacturing the continuous assembly and an apparatus for manufacturing the same. Each of the straps (1) is arranged such that a web-like band body (2) having a plurality of engaging projections (4,5) has a proximal end to which a frame (3) having a bore (12) into which the band body is inserted and a pair of engaging pawls (17,18) is connected. A common movable mold and a plurality of recirculation molds are combined with each other, and molding is made successively for every units while moving the recirculation molds so as to be recirculated. Thus, the units are jointed to each other by first and second joining portions at an end of each of the units so as to be continuous to each other in a longitudinal directions.

## Description

### BACKGROUND OF THE INVENTION

### Field of the Invention

The present invention relates to a continuous band assembly in which a plurality of bands are continuous to each other, which is used for binding various kinds of objects, such as binding a plurality of wires, binding saplings or seedlings and splices in agricultural gardening, binding bags covering fruits, binding of openings of refuse bags for domestic use or the like, binding curtains, binding intersections of net yarns for repairing fishing nets, binding intersections of reinforcing bars at a construction or building spot and the like, or which is used such that the bands per se are tied to branches of a fruit tree in order to release a sex pheromone agent to the atmosphere. The invention also relates to a method of manufacturing the continuous band assembly, and an apparatus for manufacturing the same.

### Description of the Prior Art

An automatic binding machine can conventionally be used to bind wires or the like by binding bands. In order to automatically supply the binding bands to the automatic binding machine, the arrangement has conventionally been such that a plurality of binding bands are arranged in row in a lateral direction, a location between projecting pieces projecting rearwardly of each frame is continued by a strip-like or web-like piece, and the web-like piece is curved and taken up.

The projecting pieces are successively cut out by the automatic binding machine, whereby the binding bands are cut off from each other. The wires or the like are bound by the cut-off binding bands.

Since, however, the above-described conventional continuous binding bands have the following disadvantages. That is, the continuous bands are arranged in row laterally, and are supplied to the automatic binding machine laterally, the numbers of bands taken up are reduced, as a matter of course, in order to avoid hindrance or obstruction of the operation. Further, since portions adjacent respectively to the free ends of the binding bands, at forward ends of the band bodies, are apt to be entangled with each other, and are difficult to be released, there may be a fear that it is impossible to automatically supply the binding bands. Furthermore, a location between the projecting pieces which project rearwardly of each frame, is continued by the web-like pieces. Since, however, at binding, the projecting pieces are cut to excise the web-like pieces, there are many wastes in material. This is uneconomical.

The invention intends to solve the above-discussed problems of the prior art, and it is an object of the invention to provide a continuous band assembly, a method of manufacturing the continuous band assembly, and an apparatus for manufacturing the same, in which the numbers taking up a plurality of bands can increase so that an attempt can be made to improve performance of operation such as binding and the like, the bands can smoothly be released so as to ensure that the bands are automatically supplied to an automatically binding machine or the like, and waste in material can be reduced so that an attempt can be made to reduce cost.

### SUMMARY OF THE INVENTION

In order to achieve the above-described object, a continuous band assembly according to the invention comprises a web-like band body, a plurality of engaging projections provided on the band body, a frame connected to a proximal end of the band body and having a bore into which the band body is inserted, and a pair of engaging pawls provided integrally with the frame and engaged with the engaging projections of the band body which is inserted in the bore, to fasten the engaging projections so as not to come out, wherein a plurality of bands are continued to each other in a longitudinal direction.

It is preferable that the continuous band assembly is arranged such that the bands are integrally joined at locations on the halfway of the band bodies. Further, it is preferable that each of the band bodies has a forward end which can integrally be joined to the frame of the band body adjacent thereto. Furthermore, it is preferable that the bands are integrally joined by joining portions each having an intermeshing configuration.

Moreover, it is preferable that each of the engaging projections is connected to a corresponding one of the band bodies, and wherein the engaging pawls of each of the bands project so as to have elasticity at an outer end, adjacent to an outlet, of a corresponding one of the bores in walls of the frames in such a direction as to extend along a direction in which the band body is inserted.

The continuous band according to the invention can be arranged such that each of the bands is formed such that a sex pheromone agent can be released by a high-molecular material having mixed therewith the sex pheromone agent. Alternatively, the continuous band can be arranged such that each of the bands is molded by a porous high-molecular material in order to be impregnated such that a sex pheromone agent can be released. Further, the high-molecular material can use any one of, or body of a photolytic plastic material and a biodegradation plastic material.

As described above, in case where the sex pheromone agent is used, the bands are continued to each other and, subsequently, each of the bands is covered with a thin membrane or film which has water repellency and gas permeability and which is capable of gradually releasing the sex pheromone agent. Further, in case where the photolytic plastic material is used as the high-molecular material, it is preferable that the band is covered with a thin membrane having optic permeability, in addition to the above-described properties. Silicon can be used as a material of the thin membrane.

A method of manufacturing a continuous band assembly, according to the invention, is so arranged as to comprise a plurality of bands each having a web-like band body, a plurality of engaging projections provided on the band body, a frame connected to a proximal end of the band body and having a bore into which the band body is inserted, and a pair of engaging pawls provided integrally on the frame and engaged with the engaging projections of the band body which is inserted into the bore, to fasten the engaging projections so as not to come out, the method comprising the steps of:
successively molding the bands every units;
integrally joining an end of the unit under being molded, to an end of the unit which has been molded, but which is not yet hardened; and
continuing the plurality of the bands in a longitudinal direction.

The unit in the method of manufacturing a continuous band can comprise a first forming part, adjacent to an proximal end, of the web-like band body having the engaging projections, which extends from a halfway in the band body to the proximal end, a frame connected to the proximal end of the band body and having a bore through which the band body is inserted, the engaging pawls provided integrally on the frame and engaged with the engaging projections of the band body which is inserted into the bore, to fasten the engaging projections so as not to come out, and a second forming part, adjacent to a forward end, of the band body of the band continuous to the adjacent band, the second forming part being connected to the frame and corresponding to an except portion of the band body, wherein a proximal end of said second forming part on the forward end of the band body of the unit under being molded and one of first and second joining portions formed at the forward end of the second forming part, on the side of the proximal end, of the band body are integrally joined to the other joining portion of the unit having been molded.

Alternatively, the unit in the method of manufacturing a continuous band assembly can comprise the web-like band body having the engaging projections, the frame connected to the proximal end of the band body and having the bore in which the band body is inserted, and the engaging pawls provided integrally on the frame and engaged with the engaging projections of the band body which is inserted into the bore, to fasten the engaging projections so as not to come out, wherein one of first and second joining portions formed behind the frame of the unit under being molded and at the forward end of the band body is integrally joined to the other joining portion of the unit having been molded.

Alternatively, the unit in the method of manufacturing a continuous band can comprise, between first and second joining portions, the plurality of bands under a longitudinally continuous condition, each of which is provided with the web-like band body, the engaging projection provided on the band body, the frame connected to the proximal end of the band body and having the bore into which the band body is inserted, and the engaging pawls provided integrally on the frame and engaged with the engaging projections of the band body which is inserted into the bore, to fasten the engaging projections so as not to come out, wherein one of first and second joining portions of the unit under being molded is integrally joined to the other joining portion of the unit having been molded.

It is preferable that the first and second joining portions are under an intermeshing condition.

An apparatus for manufacturing a continuous band assembly, according to the invention, comprises a plurality of bands each having a web-like band body, a plurality of engaging projections provided on the band body, a frame connected to a proximal end of the band body and having a bore into which the band body is inserted, a pair of engaging pawls provided integrally on the frame and engaging with the engaging projections of the band body which is inserted into the bore, to fasten the engaging projections so as not to come out, a common movable mold and a plurality of recirculation molds the same in configuration as each other capable of cooperating with each other for every units to integrally mold the band, moving means for moving the common movable mold so as to close and open the common movable mold, and moving means for moving the plurality of recirculation molds so as to be recirculated, to arrange two recirculation molds under a front and rear series condition in a longitudinal direction, wherein the two recirculation molds have cavities which are continuous to each other under an series arranged condition, wherein each of the cavities has, only at a single location, first and second forming parts of the first joining portion located at one end of the unit and the second joining portion located at the other end of the unit, wherein the common movable mold has a molding impeding portion which is inserted into the molding portion of one of the first and second joining portions in the cavity of a rear one of the two recirculation molds arranged under the series condition, and wherein the cavity of the common movable mold has a molding portion which cooperates with a molding portion of the one joining portion in the cavity of the recirculation mold on the front side.

The common movable mold and the recirculation molds in the apparatus for manufacturing a continuous band assembly can comprise the first forming part, on the side of the proximal end, of the web-like band body having the engaging projections which extend from a halfway in the band body to the proximal end, the frame connected to the proximal end of the band body and having the bore in which the band body is inserted, the engaging pawls provided integrally on the frame and engaged with the engaging projections of the band body which is inserted in the bore, to fasten the engaging projection so as not to come out, and the forming part, on the side of the forward end, of the band body of the band continuous to the adjacent band, the second forming part being connected to the frame and corresponding to an except portion in the band body, wherein a unit located at the proximal end of the first forming part, adjacent to the forward end, of the band body and having the first joining portion, and a unit located at the forward end of the second forming part, adjacent to the proximal end, of the band body and having the second joining portion are successively molded.

Alternatively, the common movable mold and the recirculation molds can comprise the web-like band body having the engaging projections, the frame connected to the proximal end of the band body and having the bore through which the band body is inserted, and the engaging pawls provided integrally with the frame and engaged with the engaging projections of the band body which is inserted in the bore, to fasten the engaging projection so as not to come out, wherein a unit located behind the frame and having the first joining portion, and a unit located at the forward end of the band body and having the second joining portion are successively molded.

Alternatively, the common movable mold and the recirculation molds of the apparatus for manufacturing a continuous band assembly can successively mold a unit having, between the first and second joining portions, a plurality of bands under a longitudinally continuous condition, comprising the web-like band body, the engaging projections provided on the band body, the frame connected to the proximal end of the band body and having the bore into which the band body is inserted, and the engaging pawls provided integrally with the frame and engaged with the engaging projection of the band body which is inserted into the bore, to fasten the engaging projections so as not to come out,

It is preferable that the common movable mold and the recirculation molds successively mold units each having the first and second joining portions having an intermeshing configuration.

As described above, the plurality of bands are continued to each other in the longitudinal direction, whereby it is possible to take up the bands longitudinally, and it is possible to successively supply the bands to the automatic binding machine or the like in a feed direction of the interior thereof. Even if there are many winding numbers of the bands, there is no case where the bands interfere with operation. Accordingly, it is possible to considerably increase the winding numbers of bands. Further, the bands are taken up in the longitudinal direction, and have no free ends. Accordingly, there is no fear that the bands are twined or intertwined with each other. Thus, it is possible to release the bands smoothly.

### BRIEF DESCRIPTION OF THE DRAWINGS

Figs. 1 and 2 are an enlarged top plan view and a centrally longitudinal cross-sectional view, respectively, showing an arrangement of a single band;
Figs. 3 to 9 are views showing a first embodiment of a continuous band assembly according to the invention, Fig. 3 being a schematic top plan view showing a portion of the first embodiment, Fig. 4 being a partially schematic side elevational view, Fig. 5 being a partially enlarged top plan view, Fig. 6 being a centrally longitudinal cross-sectional view of Fig. 5, Fig. 7 being an enlarged cross-sectional view showing a principal portion, Fig. 8 being a cross-sectional view taken along a line A - A in Fig. 7, and Fig. 9 being a cross-sectional view taken along a line B - B in Fig. 5;
Fig. 10 is a view for explanation, showing a condition under which a plurality of wires are bound by the band separated from the continuous band assembly;
Fig. 11 is a view showing a common movable mold which is used in an apparatus for manufacturing the continuous band assembly according to the above-described embodiment, and is a schematic bottom view with a detailed configuration within a cavity omitted;
Fig. 12 is a schematic side elevational view showing the common movable mold;
Fig. 13 is a view showing first and second recirculation molds which are used in the apparatus for manufacturing the continuous band assembly according to the aforementioned embodiment, and is a schematic top plan view with the detailed configuration within the cavity omitted;
Fig. 14 is a schematic side elevational view showing the recirculation mold;
Figs. 15 to 22 are views showing a method of manufacturing the continuous band assembly according to the embodiment, Figs. 15 to 20 being schematic side elevational views for explanation of manufacturing steps, and Figs. 21 and 22 being schematic top plan views for explanation of the manufacturing step;
Fig. 23 is a schematic top plan view showing an example of a unit for arrangement of the continuous band assembly, which is manufactured by the manufacturing method and the manufacturing apparatus according to the above-mentioned embodiment;
Fig. 24 is a schematic top plan view showing a condition under which a plurality of units are united together; and
Figs. 25 and 26 are views showing a second embodiment of the continuous band assembly according to the invention, Fig. 25 being a partially schematic top plan view, and Fig. 26 being an enlarged cross-sectional view taken along a line C - C in Fig. 25.

### DETAILED DESCRIPTION OF THE INVENTION

Various embodiments of the invention will hereunder be described with reference to the accompanying drawings.

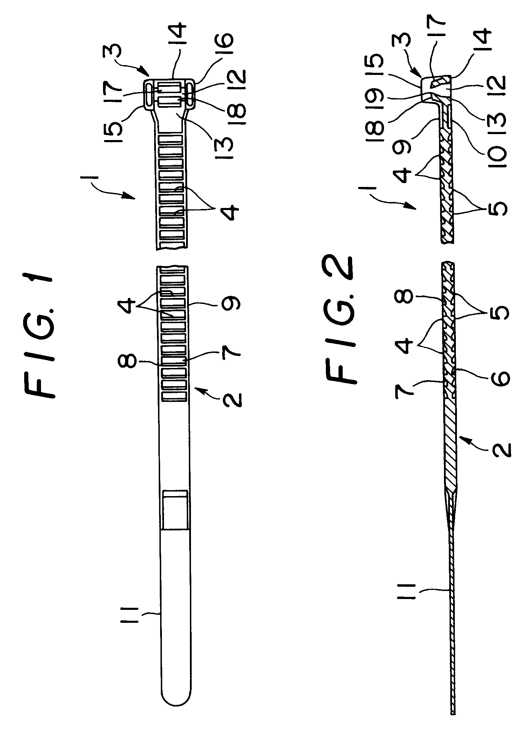

Referring first to Figs. 1 to 8, a binding band 1 is made of a high-polymer or macromolecular material. A band body 2 has a proximal end thereof to which a frame 3 having a square configuration is connected. The band body 2 is formed into an elongated strip or web configuration and has planar surfaces on both sides thereof. A plurality of first and second engaging projections 4 and 5 are provided in row longitudinally respectively on the planar surfaces of the band body 2. The first and second engaging projections 4 and 5 have respective engaging surfaces 6 thereof which are perpendicular to the longitudinal direction, and which are perpendicular to the planar surfaces of the band body 2. Each of the engaging projections 4 and 5 has an inclined portion 7 which is gradually narrowed or thinned toward a forward end of the band body 2 from an outer end of a corresponding one of the engaging surfaces 6. A location between each pair of adjacent engaging projections 4 and 4 and 5 and 5 is formed into a short thin-thickness portion 8. The band body 2 has both side edges in the longitudinal direction. The guide ribs 9 and 10 substantially the same in height as the outer ends of the respective first and second engaging projections 4 and 5 are formed on the both side edges of the band body 2. A forward end portion 11 of the band body 2 is formed into a thin-thickness configuration, and is formed such that a width is gradually narrowed slightly toward the forward end of the band body 2. The frame 3 has a bore 12 therethrough for inserting thereinto the band body 2. A portion of the frame 3 to which the band body 2 is connected, and a pair of walls 13 and 14 which are located opposite to the portion of the frame 3 to which the band body 2 is connected are formed lower than a pair of other opposed walls 15 and 16. A pair of first and second engaging pawls 17 and 18 are provided in projection on an outer end of the bore 12 at an outlet thereof, defined by the walls 14 and 13 in a direction extending along an inserting direction of the band body 2. Each of the engaging pawls 17 and 18 is separated from the walls 15 and 16 which put therebetween the engaging pawls 17 and 18, and is formed to have resiliency or elasticity. Each of the engaging pawls 17 and 18 has an internal or inside configuration which is formed correspondingly to the outer configuration of a corresponding one of the first and second engaging projections 4 and 5. Each of the engaging pawls 17 and 18 has, adjacent to the forward end thereof, an engaging portion 19 which is so formed as to narrow the bore 12. Each of the engaging pawls 17 and 18 has a forward end whose outward or outer surface which is slightly inclined so as to be gradually reduced in height from the inner end to the outer end. The walls 15 and 16 which put therebetween the first and second engaging pawls 17 and 18 are so set as to project higher than the first and second engaging pawls 17 and 18. Further, the first and second engaging pawls 17 and 18 have respective engaging portions 19 thereof which have respective forward ends thereof whose spacing or interval is so set as to be narrower than the wall thickness of the thin-thickness portion 8 of the band body 2. The bore 12 defined by the walls 13 and 14 has an inlet which is chamfered to facilitate insertion of the band body 2.

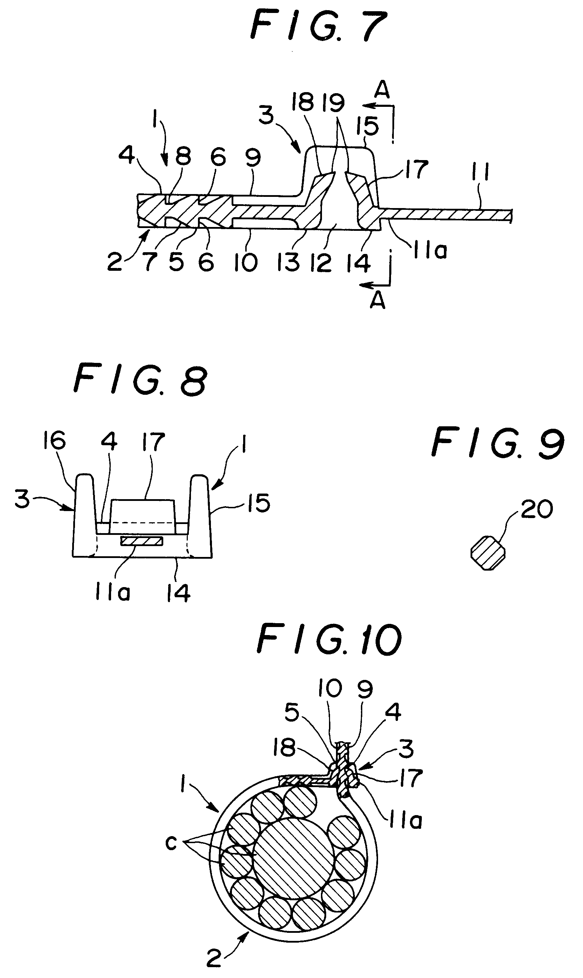

In order to bundle or bind the wires by the band 1, as shown Fig. 10 which is the view for explanation, showing a wire bundled or bound condition, the band 1 is inserted into the bore 12 in the frame 3 from the forward end 11 of the band body 2, along the outer periphery of the plurality of wires c bound, and is pulled or tensioned, whereby it is possible to cause the first and second engaging pawls 4 and 5 to pass through the engaging pawls 17 and 18, by utilization of resilient or elastic deformation of the first and second engaging pawls 17 and 18. At this time, since the guide ribs 9 and 10 having respective heights thereof substantially the same as the outer ends of the respective engaging projections 4 and 5 are provided respectively on the longitudinal edges of the band body 2 on both sides as described previously, it is possible to cause the band body 2 to easily pass through the bore 12, and it is possible to cause the engaging projections 4 and 5 to easily pass through the engaging pawls 17 and 18 by the inclined portions 7. In this manner, the bundle of wires c is tightened and, subsequently, a tensile force of the band body 2 is released, whereby it is possible to engage the engaging surfaces 6 (refer to Fig. 7) of the first and second engaging projections 4 and 5 with the first and second engaging pawls 17 and 18 under a condition that the bundle of wires c is tightened, to fasten the engaging surfaces 6 so as not to come out of the first and second engaging pawls 17 and 18, thereby enabling the bundle of wires c to be united or bound. At this time, since the interval between the forward ends of the engaging portions 19 of the first and second engaging pawls 17 and 18 is so set as to be narrower than the wall thickness of each of the thin-thickness portions 8 of the band body 2, as described above, the engaging portions 19 are so pressurized as to be cut into the thin-thickness portions 8 by impact resiliency of the first and second engaging pawls 17 and 18, so that it is secured or ensured that the engaging portions 19 are engaged with the engaging surfaces 6 of the first and second engaging projections 4 and 5 and are so fastened as not to come out. After binding, the projecting portions, at the forward ends, of the first and second engaging pawls 17 and 18 in the band body 2 should be cut off at any suitable locations. Since, as described previously, the walls 15 and 16 nipping therebetween the first and second engaging pawls 17 and 18 are so set as to project higher than the first and second engaging pawls 17 and 18, the first and second engaging pawls 17 and 18 can freely be moved, when the wires are bound by an automatic binding machine, with the walls 15 and 16 serving as standards. Moreover, when the projecting portion, at the forward end, of the band body 2 is cut off by the automatic binding machine, it is possible to prevent the first and second engaging pawls 17 and 18 from being damaged.

By the way, a conventional binding band is arranged as follows, and has the following problems. That is, generally, a web-like band body has a planar surface on the one side thereof. A plurality of engaging projections having respective engaging surfaces thereof in a direction perpendicular to a longitudinal direction are provided in row on the planar surface of the band body. The band body has a proximal end to which a frame having a bore through which the band body passes is connected. A single engaging pawl is provided in projection on an inner surface of the bore in the frame so as to have elasticity. In this manner, with the arrangement of the conventional example, since it is necessary that the engaging pawl is provided within the bore so as to project from the inner surface of the bore in the frame, and elasticity is given to the engaging pawl, a connecting portion between the inner surface of the frame and the engaging pawl is arranged axially of the frame, that is, in the direction perpendicular to the direction in which the band body is inserted. Accordingly, when the band body is inserted into the bore in the frame and the engaging projections pass through the bore in the frame so as to resiliently or elastically deform the engaging pawl, a large burden is applied to the connecting portion between the inner surface of the frame and the engaging pawl as described above so that there is a fear that, when the plurality of engaging projections pass through the bore in the frame, the plurality of engaging projections are so damaged as to be cut out. Furthermore, after the wires or the like have been bound together, when a force is applied to the wires and the like in a direction separating the wires from each other, the engaging pawl is pressurized by the engaging projections, and there is a fear that the connection portion is damaged in cutting similarly to the above. Thus, this is inferior in reliability of the binding. Moreover, since the engaging pawl is so provided as to project from the inner surface of the frame as described previously, the outer configuration of the frame increases with respect to the wall thickness of the band body. Thus, the frame stands in the way in case where the band is housed within a narrow space. Further, an arrangement that the engaging pawl projects from the inner surface of the frame, as described above, is complex or complicated, and the arrangement must be injection-molded. However, a mold for use in the injection molding is also complicated. Accordingly, the arrangement will increase in cost.

To the contrary, according to the band 1 illustrated in Figs. 1 and 2, the first and second engaging pawls 17 and 18 are provided integrally in injection at the outer end of the outlet of the bore 12 defined by the walls 14 and 13 of the frame 3, in a direction along the inserting direction of the band body 2 (upwardly in Fig. 7). Accordingly, it is possible to form the engaging pawls 17 and 18 thick in thickness to improve their strength. Even if the first and second engaging projections 4 and 5 pass through the bore 12, and a force is applied to the binding portion of the wires c after bounding or binding so as to separate the wires c from each other, it is possible to prevent the first and second engaging pawls 17 and 18 from being damaged in cutting. Accordingly, it is possible to improve the reliability of the binding and the like. Furthermore, since the first and second engaging pawls 17 and 18 are provided integrally in projection on the outer ends of the walls 14 and 13 of the frame 3, but are not provided within the frame 3 as described previously, it is possible to reduce the outer configuration of the frame 3. Accordingly, it is possible to easily house the frame 3 within a narrow space. Moreover, an attempt can be made to simplify the construction. Accordingly, even if the frame 3 is injection-molded, an attempt can be made to simplify the mold. Thus, it is possible to offer the frame 3 at low cost. Further, even if compactibility or moldability is inferior, it is possible to use a material low in cost, such as polyethylene, polypropylene or the like by the aforesaid arrangement or structure. Furthermore, a material high in strength such as resin having incorporated therein glass fibers, or the like is used so that an attempt can be made to miniaturization.

In the first embodiment according to the invention, the binding band 1 having the above-described arrangement is such that the front and rear bands 1 are integrally bound to each other under an intermeshing or interlocking condition by first and second binding portions 20 and 21 at the halfway thick-thickness portion which is located slightly inwardly from the forward end portion 11 of the band body 2, and are continuous to each other in plural in the longitudinal direction.

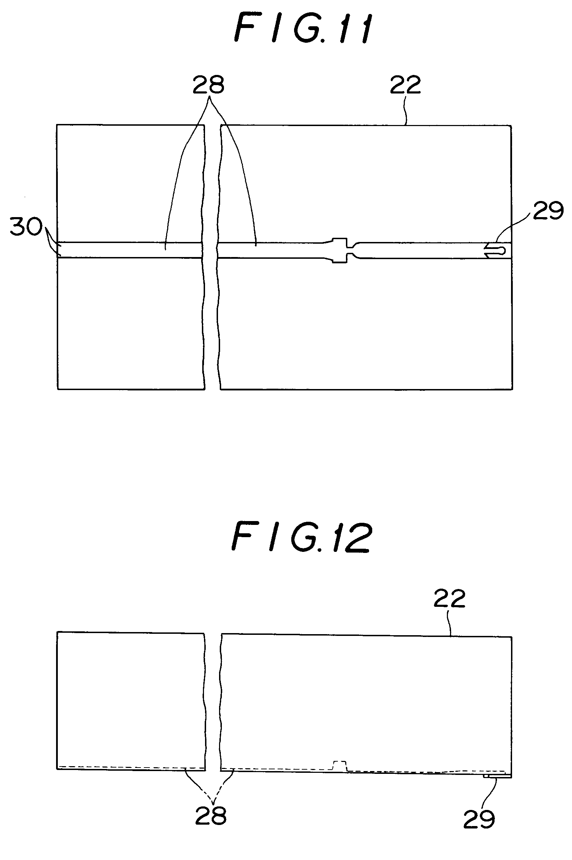

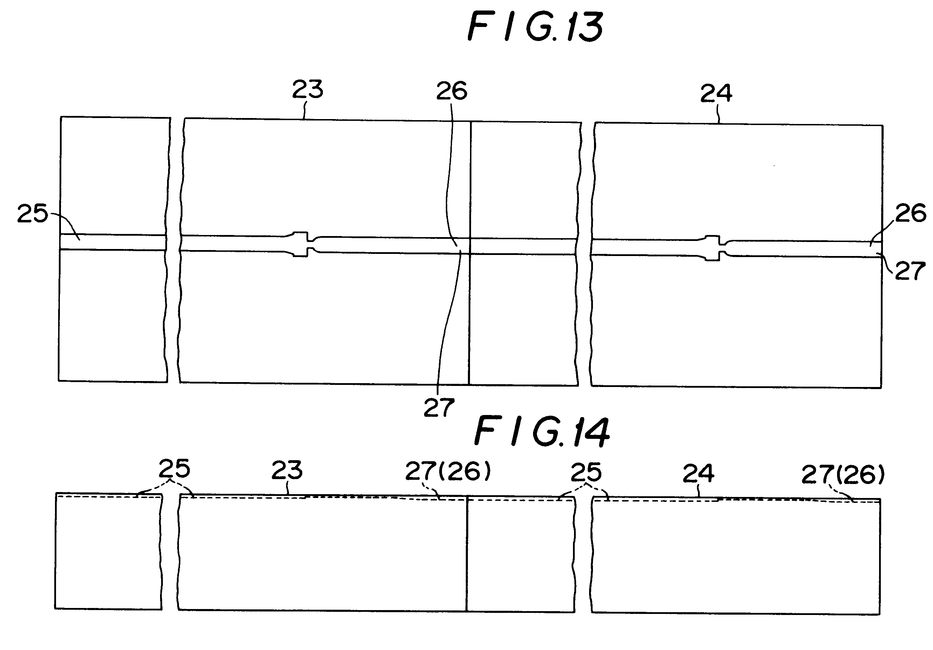

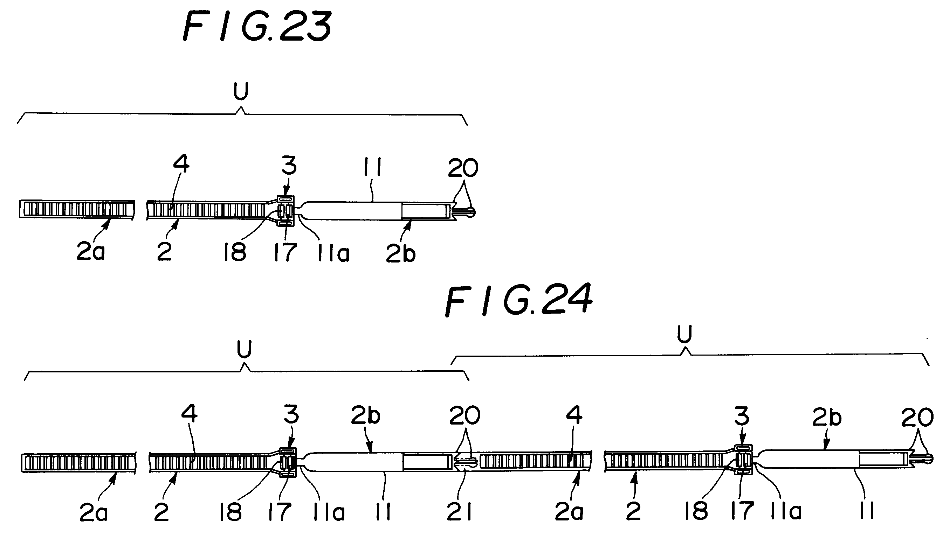

In order to produce the continuous band assembly according to the embodiment of the invention, a common movable mold (upper mold) 22 illustrated in Figs. 11 and 12 and first and second recirculation molds (lower molds) 23 and 24 illustrated in Figs. 13 and 14 are used in combination with each other, and the bands 1 are bound together while being molded for every units U illustrated in Figs. 23 and 24.

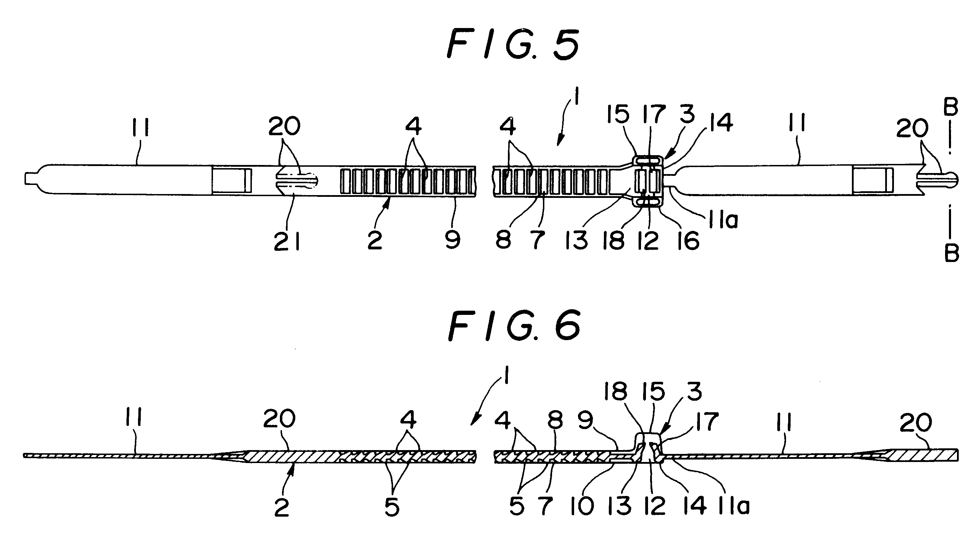

As shown in Figs. 23 and 24, the unit U in the present embodiment cannot form a single band under a completed condition by itself. The unit U has a forming part 2a thick in thickness, adjacent to the proximal end of the band body 2, which has the first and second engaging projections 4 and 5, which is provided on the way of the web-like or strip-like band body 2, and which extends from a portion of the band body 2 except for the thin-thickness forward end 11 thereof to the proximal end of the band body 2. The unit U further has the frame 3 connected to the proximal end of the band body 2 and having the bore 12. The unit U also has first and second engaging pawls 17 and 18 which are provided integrally on the frame 3 and which are engaged with the first and second engaging projections 4 and 5 of the band body 2 inserted through the bore 12, to fasten the first and second engaging projections 4 and 5 so as not to come out. The unit U has a thin-thickness forming part 2b, adjacent to the forward end of the band body 2 of the band 1 continuous to the adjacent band, which is connected to the frame 3 through a connecting portion 11a and which corresponds to the except portion of the band body 2 adjacent to the forward end 11 thereof. The forming part 2b of the unit U adjacent to the forward end of the band body 2, and the forming part 2a of the unit U continuous thereto, adjacent to the proximal end of the band body 2 are so formed as to be integrally joined together under an intermeshing condition by the first joining portion 20 and the second joining portion 21. The first joining portion 20 of the forming part 2b on the side of the forward end of the band body 2 has a central rod-like portion and projection-like portions on both sides. As will also be clear from Figs. 5 and 9, the rod-like portion has both side parts which are gradually reduced in thickness from the center line toward the longitudinal edges on both sides. The rod-like portion is formed substantially into a rhombic configuration in cross-section. The rod-like portion is formed, at its forward end, with a circular portion. Projection-like portions on the both sides are so inclined as to project rearwardly as reaching the longitudinal edges from the proximal portion of the rod-like portion. The second joining portion 21 has a configuration corresponding to the first joining portion 20 and is formed into a bifurcate configuration. The first and second joining portions 20 and 21 having the above-described configurations are joined together under an intermeshing condition, whereby the bands 1 continuous to each other in the longitudinal direction are united together so as not to be released in the longitudinal direction and so as not to be separated from each other even if the bands 1 are curved along the longitudinal direction.

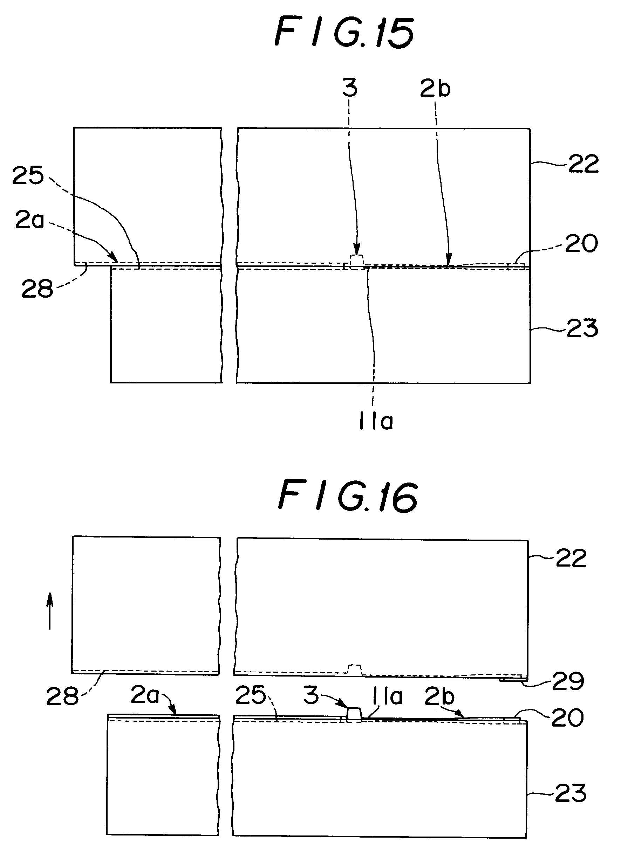

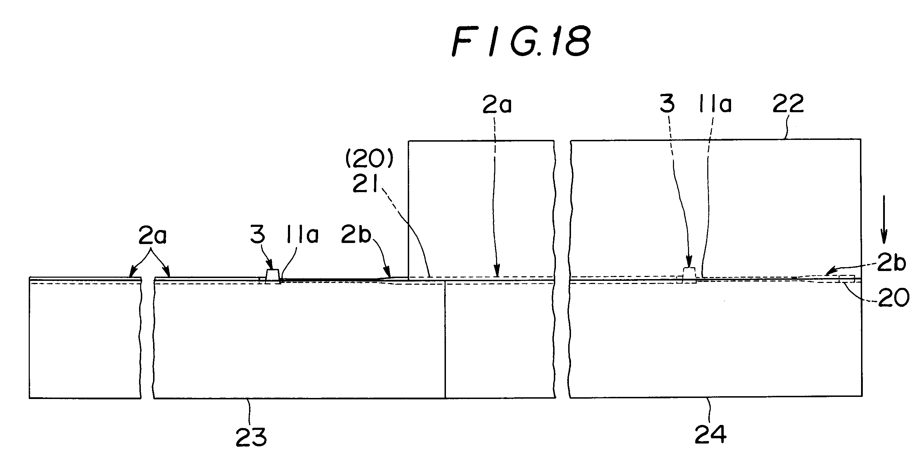

The first and second recirculation molds 23 and 24 illustrated in Figs. 13 and 14 are formed into respective configurations thereof which are the same as each other. As will be described subsequently, the first and second recirculation molds 23 and 24 are so moved as to be recirculated in a horizontal plane, and are changed in longitudinal front and rear positions with respect to the common movable mold 22 illustrated in Figs. 11 and 12. By cooperation of the common movable mold 22 and the first and second recirculation molds 23 and 24, the units U are successively formed into a continuous condition due to joining of the first and second joining portions 20 and 21. For this purpose, the first and second recirculation molds 23 and 24 are formed such that, under a condition in which the first and second recirculation molds 23 and 24 are arranged in series at front and rear of the longitudinal direction, cavities 25 are continuous to each other. Each of the cavities 25 has, only at a single location, a molding portion 27 of the second joining portion 21 at the forward end of the forming part 2a adjacent to the proximal end thereof, in addition to the molding portion 26 of the first joining portion 20 at the proximal end of the forming portion 2b adjacent to the forward end of the band body 2, and is so formed as not to have, at the front side portion, the molding portion of the second joining portion 21 of the forming part 2a adjacent to the proximal end thereof. On the other hand, as shown in Figs. 11 and 12, the common movable mold 22 is inserted into the forming portion 27 of the second joining portion 21 of the forming part 2a adjacent to the proximal end in the cavity 25 of the second recirculation mold, or first recirculation mold 24 or 23 which is located rearwardly of the first and second recirculation molds 23 and 24 arranged under the series condition as described above at the rearward side of the cavity 28 (refer to Figs. 15, 20, 21 and 22). A forming preventing portion 29 is provided in projection, for preventing forming thereof. The front portion of the cavity 28 is so formed as to have a forming portion 30 which cooperates with the forming portion 27 of the first joining portion 21 of the forming part 2a adjacent to the proximal end in the cavity 25 of the first or second recirculation mold 23 or 24 on the front side, to form the second joining portion 21 (refer to Figs 18, 20 and 22).

As shown in Figs. 15 and 16, the common movable mold 22 can be moved vertically so as to be tightened with respect to the recirculation molds 23 and 24 by moving means (not shown), or to be released therefrom. The first and second recirculation molds 23 and 24 are moved by moving means (not shown) so as to be recirculated in a horizontal plane so that the first and second recirculation molds 23 and 24 are changed in front and rear positions. As an example thereof, the first and second recirculation molds 23 and 24 are advanced or moved forwardly in a longitudinal serial direction. At an advanced position, the first and second recirculation molds 23 and 24 are moved laterally. Subsequently, the first and second recirculation molds 23 and 24 are moved rearwardly. Subsequently, the first and second recirculation molds 23 and 24 are moved rearwardly of the longitudinal series position. Specifically, the first or second recirculation mold 23 or 24 located at the front bypasses or goes around laterally, and is moved to a location rearwardly of the second or first recirculation mold 24 or 23 in the advanced position, which is located rearwardly.

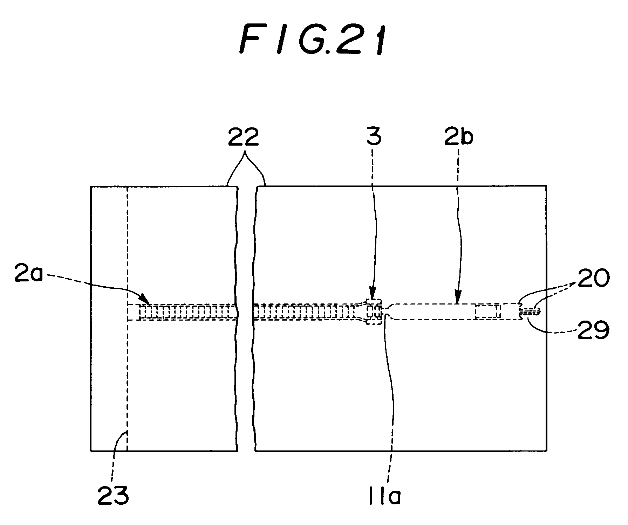

First, as shown in Figs. 15 and 21, the common movable mold 22 is combined with the first recirculation mold 23 so as to be tightened, and a polymeric or high-polymer molding material heated and melted through a sprue, a runner and a gate (all not shown) on the side of the common movable mold 22 is poured into and filled in the cavities 25 and 28 in both the molds 23 and 22, to form a first unit U illustrated in Fig. 23. When the first unit U is formed, the cavity 25 in the first recirculation mold 23 has, only at a single location at the rearward portion thereof, the first joining portion 20 located at the proximal end of the forming part 2b on the side of the forward end of the band body 2, and the forming portions 26 and 27 of the second joining portion 21 which is located at the forward end of the forming part 2a at the proximal end. The cavity 25 is so formed as not to have a forming part of the second joining portion 21 of the forming part 2a on the side of the proximal end, at a front side portion. Further, since the forming preventing portion 29 of the upper mold 22 is inserted into the forming part 27 of the second joining portion 21 of the forming part 2a on the side of the proximal end, the second joining portion 21 of the forming part 2a on the side of the proximal end of the unit U is not molded, and only the first joining portion 20 of the forming part 2b on the side of the forward end is formed.

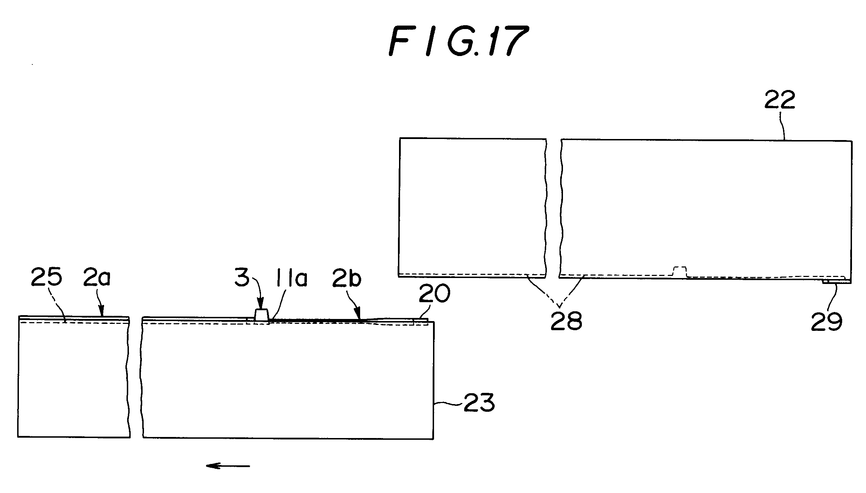

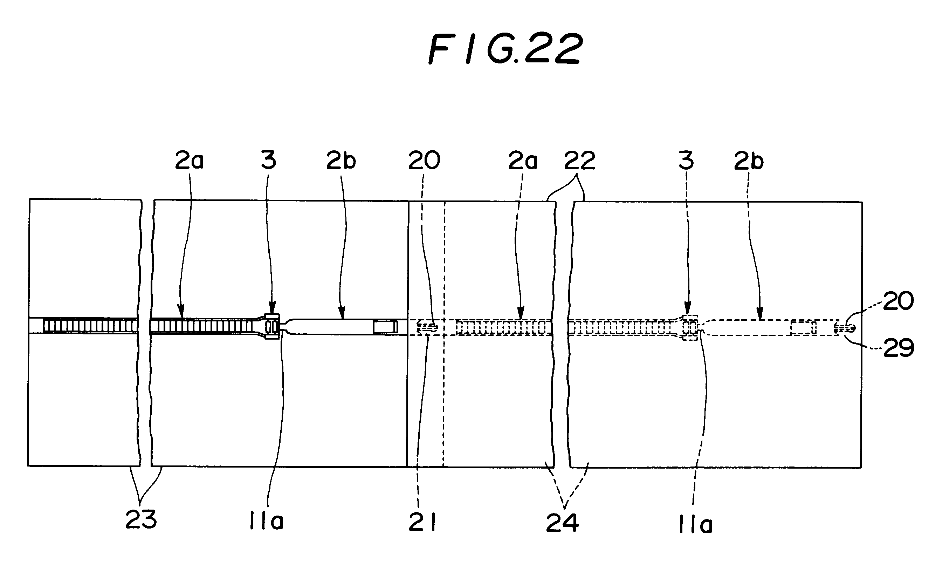

Next, as shown in Fig. 16, the common movable mold 22 is moved upwardly with respect to the first recirculation mold 23 and is released therefrom, to leave the molded unit U at a location on the side of the first recirculation mold 23. Subsequently, as shown in Fig. 17, the first recirculation mold 23 is advanced, and, as shown in Figs. 18 and 22, the second recirculation mold 24 is put in order at a location rearward of the first recirculation mold 23 under a longitudinally series condition, to correspond to the common movable mold 22. Subsequently, the common movable mold 22 is moved downwardly so that the molding preventing portion 29 is inserted into the molding portion 27 of the cavity 25 in the second recirculation mold 24 on the rearward side, and the molding portion 30 of the cavity 28 is so closed as to correspond to the molding portion 27 of the first recirculation mold 23 on the front side. Under this condition, the high-molecular molding material heated and melted is pored into and filled in the cavities 25 and 28 from the side of the common movable mold 23 similarly to the above, thereby molding a second unit U, as shown in Fig. 24. When the second unit U is molded, it is as described above to mold the first joining portion 20 which is located at the proximal end of the forming portion 2b on the forward-end side. Since, however, as described previously, the molding portion 27 of the cavity 25 in the first recirculation mold 23 on the front side is released so that the molding portion 30 of the cavity 28 in the common movable mold 22 corresponds to the molding portion 27, the second joining portion 21 located at the forward end of the forming portion 2a on the side of the proximal end can be molded under an intermeshing relation with respect to the first joining portion 20 which is located at the proximal end of the forming part 2b on the side of the forward end in the unit U molded first. Accordingly, the second unit U is molded while the first unit U having been molded is not cured or hardened, whereby it is possible to join the second joining portion 21 of the second unit U to the first joining portion 20 of the first unit U integrally under an intermeshing condition.

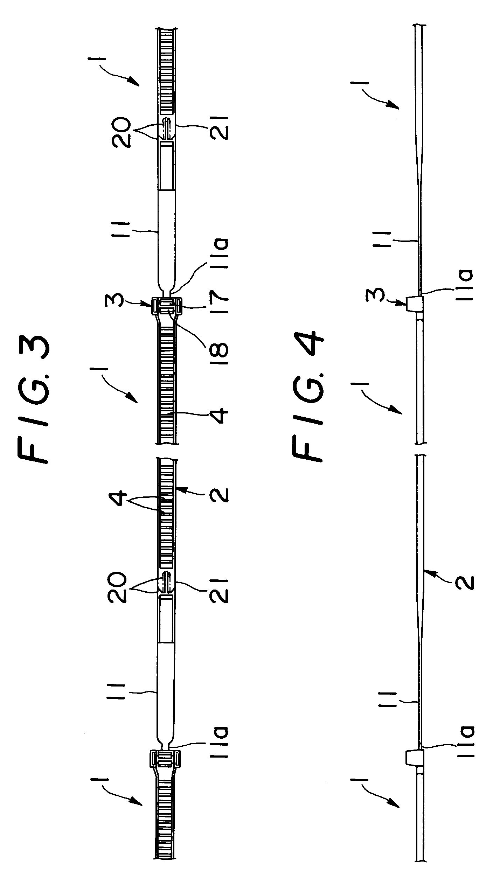

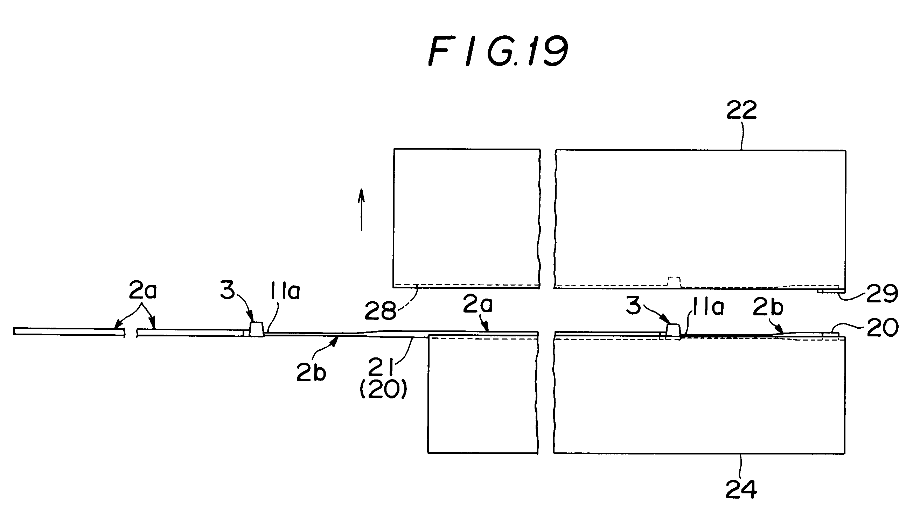

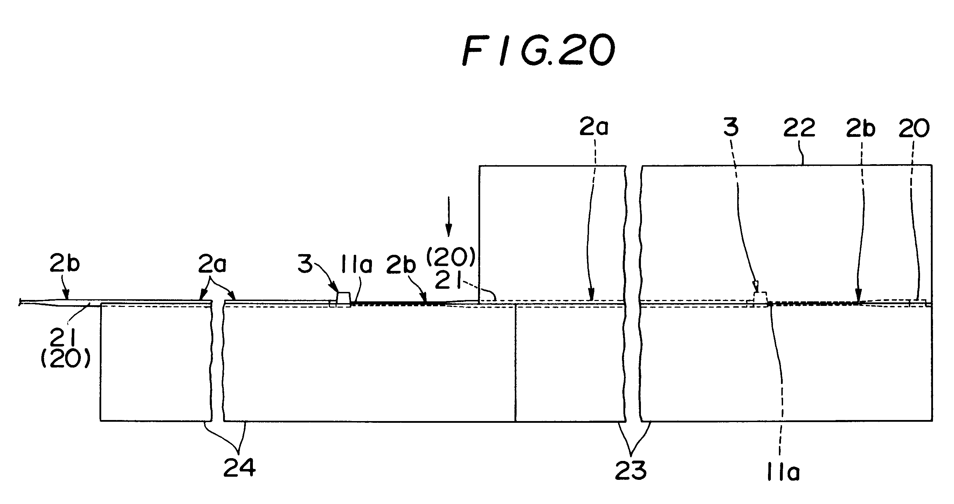

Next, as shown in Fig. 19, the common movable mold 22 is moved upwardly with respect to the second recirculation mold 24 and is released therefrom. The first recirculation mold 23 from which the unit U after having been molded is released is taken roundabout or bypassed laterally. As shown in Fig. 20, the second recirculation mold 24 is advanced or moved forwardly so that the first recirculation mold 23 is put in order at a location rearward of the second recirculation mold 24. The common movable mold 22 is moved downwardly similarly to the above, and is closed. Similarly to the second unit U, it is possible to mold a third unit U so that the first and second joining portions 20 and 21 are joined together under the intermeshing condition. Hereunder, operation similar to the above is repeated whereby, as shown in Figs. 3 and 4, it is possible to form the plurality of bands 1 under a successively continuous condition in the longitudinal direction.

The using outline of the continuous band arranged as described above will be described.

The continuous band assembly in which the plurality of bands 1 are continuous to each other longitudinally can be wound or taken up in the longitudinal direction that is the continuous direction. At this time, since the joining portions 20 and 21 of the front and rear bands 1 are arranged at and united with the thick-thickness portion of the band body 2 on the halfway as described above, it is possible to secure that the continuous condition is maintained. The bands 1 are successively supplied to the automatic binding machine, but the bands 1 can successively be supplied in the feed direction within the automatic binding machine. Accordingly, even if there are many winding numbers of the bands 1, the bands 1 do not interfere with the operation. Thus, it is possible to increase the winding numbers of bands 1 to improve the operation efficiency. Further, since the bands 1 are taken up longitudinally and have no free ends, there is no fear that the bands 1 are entangled with each other, and it is possible to release or rewind the bands 1 smoothly. Accordingly, it is possible to secure that the bands 1 are automatically supplied to the automatic binding machine. The automatic binding machine successively cuts out the supplied continuous band assembly one by one at the connecting portions 11a between the frames 3 and the band bodies 2, to execute binding operation. As described above, however, since the bands 1 are continuous to each other longitudinally, it is possible to shorten the connecting portions 11a so that it is possible to reduce waste of material. In order to bind the wires by the cut-off bands 1, similarly to the above, as shown in Fig. 10, each of the bands 1 is inserted into a corresponding one of the bores 12 in the frames 3 from the side of the forward end 11 of the band body 2 at the outer periphery of the bundle of the plurality of wires c, and the forward end of band 1 is pulled, whereby the first and second engaging projections 4 and 5 can pass through the bore 12 by the utilization of the elastic deformation of the engaging pawls 17 and 18. In this manner, the bundle of wires c is tightened and, subsequently, the tensile force on the band body 2 is released, whereby the first and second engaging projections 4 and 5 are engaged respectively with the first and second engaging pawls 17 and 18 under a condition that the bundle of wires c is tightened, so that the first and second engaging projections 4 and 5 are fastened so as not to come out. Thus, the bundle of wires c can be bound. After binding, forward projecting portions of the first and second engaging pawls 17 and 18 in the band body 2 are cut off at a suitable location as occasion demands.

In this manner, according to the continuous band assembly according to the embodiment of the invention, it is possible to secure that the bands are supplied to the automatic binding machine or the like as described above. Further, waste of the material is reduced so that an attempt can be made to reduce the cost. In addition, since the bands are bound at the joining portions 20 and 21 of the band bodies 2 at any suitable locations on the way, it is possible to bind the bands 1 at the thick-thickness portions. Accordingly, it is possible to improve the binding strength. By the fact that the binding strength is improved in this manner, it is possible to secure that, particularly, bands of small size are maintained under a continuous condition. Further, the engaging projections 4 and 5 are formed on the planar surface of each of the band bodies 2 formed into a web-like configuration, and the engaging pawls 17 and 18 project in a direction extending along the inserting direction of the band body 2, at the outer end of the bore 12 for insertion of the band body, at the side of the outlet, in the frame 3, whereby it is possible to form the engaging pawls 17 and 18 into a thick thickness to improve strength, thereby improving the reliability of binding. It is possible to reduce the outer configuration of the frame 3 to house the band 1 in a narrow space. An attempt can be made to simplify the structure or construction. Thus, it is possible to provide the band assembly at low cost.

Next, a second embodiment of the continuous band assembly according to the invention will be described.

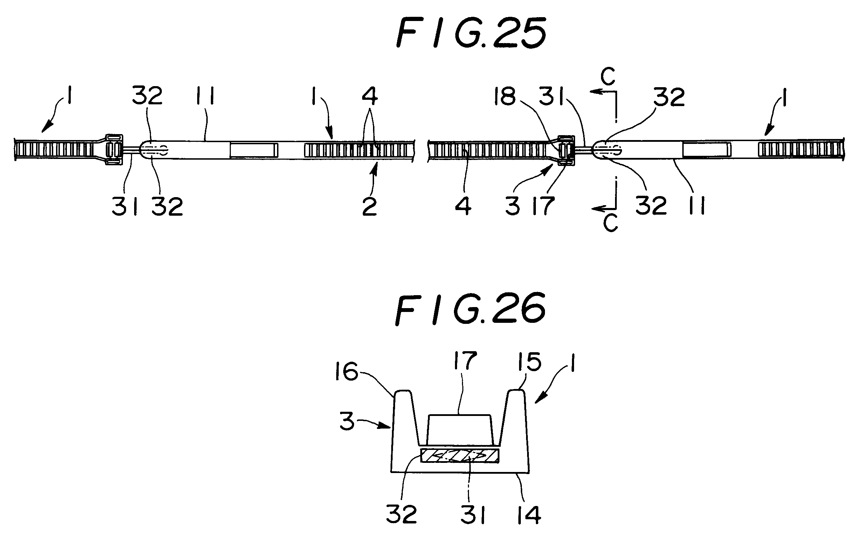

In the present embodiment, as shown in Figs. 25 and 26, a single band 1 substantially under a completed or finished condition is united or joined to a frame 3 by a forward end 11 of a band body 2. The details thereof will be described. As described previously, the band 1 is provided with the band-like or web-like band body 2 having first and second engaging projections 4 and 5, the frame 3 connected to the proximal end of the band body 2 and having a bore 12 through which the band body 2 is inserted, and a pair of engaging pawls 17 and 18 provided integrally on the frame 3 and engaged with the engaging projections 4 and 5 of the band body 2 inserted through the bore 12 to fasten the engaging projections 4 and 5 so as not to come out. When the band 1 is molded, a first binding portion 31 is provided integrally behind the frame 3 at a location opposite to the band body 2, and a pair of second binding portions 32 are formed at a forward end of the band body 2. The first binding portion 31 has a plate-like portion and a disc-like portion larger in diameter than a width of the plate-like portion at a forward end thereof. The first binding portion 31 has both front and rear sides which are gradually reduced in thickness respectively toward the longitudinal edges on both sides from the center line. The first binding portion 31 has a cross-sectional surface which is brought to a rhombic configuration. Each of the second binding portions 32 is brought to a condition in mesh with the first binding portion 31 and, in addition, the second binding portions 32 are so formed as to wrap the first binding portion 31 from both sides. First, a first band 1 having the first binding portion 31 is formed in the manner described above (a forward end having the second joining portions 32 of the band body 2 is not formed in the first band 1). Subsequently, when a subsequent second band 1 is molded, the forward end of the first joining portion 31 of the first band 1 is insert-molded with respect to the second joining portions 32 at the forward end of a second band 1. At this time, the second joining portions 32 at the forward end of the second band 1 are in mesh with the first joining portion 31 of the first band 1. Moreover, the second joining portions 32 are molded so as to wrap the forward end of the first joining portion 31. Thus, the second joining portions 32 are united together under a sure coming-out fastening condition in the longitudinal direction of the band 1 and under a condition in which the second joining portions 32 are not peeled off or separated even if the second joining portions 32 are curved along the longitudinal direction. Hereinafter, a plurality of bands 1 are successively continued to each other in the longitudinal direction in the manner similar to the above.

The continuous band assembly according to the embodiment can also be manufactured by a manufacturing method and a manufacturing apparatus similar to those in case where the continuous band assembly according to the first embodiment is manufactured, and the description thereof will be omitted.

In the above-described embodiments, a case has been described where the bundle of wires c is bound. In addition thereto, however, the embodiments can be used to the fact that various objects such as seedlings, splices and the like in agricultural gardening are bundled, or to the fact that intersections of reinforcing bars and the like are fixed. Particularly, in case where the embodiments are used in the field of agricultural gardening, photolytic plastic materials are used whereby, after a predetermined period of time, the plastic materials are dissolved or decomposed by optics so that the plastic materials can naturally come off or fall off. Further, by the fact that the photolytic plastic materials are used, only chopping-off of the photolytic plastic materials after having been used enables the photolytic plastic materials to be decomposed by bacteria. Accordingly, collecting operation can be dispensed with. This is very convenient. Furthermore, retaining or holding portions are integrally provided on the frame 3 or the like, a sex pheromone agent is retained by the holding portions, and the band 1 per se is gently tied to branches of a fruit tree, or the like, whereby the sex pheromone agent is gradually released to the atmosphere, to confuse existence of female noxious insects, thereby impeding a copulation action with males so that it is possible to prevent noxious insects of subsequent generation from being generated.

Moreover, the band 1 is molded such that the sex pheromone agent can be released by a high-molecular material having mixed therewith the sex pheromone agent. Alternatively, the band 1 is molded by a high-molecular material so as to have continuous porosity, and the above-described bore is impregnated with the sex pheromone agent such that the sex pheromone agent can be released. The band 1 per se is gently tied about the branches of the fruit tree or the like, whereby it is possible to gradually release the sex pheromone agent to the atmosphere to impede a copulation action of noxious insects, as described above. In this case, photolytic plastic materials, or biodegradation plastic materials can be used as the high-molecular materials. Further, it is preferable that the continuous band assembly after molding is covered with a thin membrane such as silicon or the like having water repellency, gas permeability and light permeability so that the sex pheromone agent does not flow out by rainwater, and the sex pheromone agent is gradually released to the atmosphere over a relatively long period of time.

In connection with the above, a recirculation mold is not limited to two of the first and second recirculation molds 23 and 24, but recirculation molds of the number more than two are so used as to be moved in recirculation. Furthermore, in the above-described embodiments, case has been described where the manufacturing apparatus is arranged into vertical type. However, the apparatus may be arranged into horizontal type. In this case, the units U after having been molded may successively be molded while being fed in the horizontal direction, or may be molded while being successively fed in a vertical direction. The high-molecular molding materials heated and melted are poured into and filled in the cavities from the side of the recirculation molds. Moreover, the arrangement may be such that a condition under which the plurality of bands 1 under a completed or finished condition are successively bound to each other at the location behind each frame 3 and a location at the forward end of each band body 2 at a location between the first and second binding portions 20 and 21 or 31 and 32 is brought to the unit U, and the units U are continued to each other longitudinally while being successively joined to each other at the joining portion similarly to the above. Further, the arrangement may be such that, when the units U are successively molded and continued to each other, the units U are fed in a direction opposite to that described above, and the first joining portion 20 or 31 of the unit U while being molded is united to the second joining portion 21 or 32 of the molded unit U. Furthermore, the first and second joining portions are not brought to an intermeshing condition, but can be jointed linearly in a direction perpendicular to the longitudinal direction of the band body 2. Moreover, the engaging pawls 17 and 18 are not limited to the above-described arrangement, but may be provided within the frame 3. Further, in order to be used in case where the bands are bound gently in the field of agricultural gardening or the like, the arrangement may be such that the engaging projections 4 and 5 are provided at a plurality of locations or only at a single location. Furthermore, the engaging projections and the engaging pawls may be provided on either one of both sides, without being provided on the both sides. In addition, the invention may be modified in design variously within the scope without departure of the fundamental technical idea or concept.

## Claims

1. A continuous band assembly characterized by comprising a web-like band body, a plurality of engaging projections provided on said band body, a frame connected to a proximal end of said band body and having a bore into which said band body is inserted, and a pair of engaging pawls provided integrally with said frame and engaged with said engaging projections of said band body which is inserted in said bore, to fasten said engaging projections so as not to come out, wherein a plurality of bands are continued to each other in a longitudinal direction.

2. A continuous band assembly according to claim 1, characterized in that said bands are integrally joined at locations on the halfway of said band bodies.

3. A continuous band assembly according to claim 1, characterized in that each of said band bodies has a forward end which is integrally joined to the frame of the band body adjacent thereto.

4. A continuous band assembly according to claim 2 or 3, characterized in that said bands are integrally joined by joining portions each having an intermeshing configuration.

5. A continuous band assembly according to any one of claims 1 to 4, characterized in that each of said engaging projections is connected to a corresponding one of said band bodies, and that said engaging pawls of each of said bands project so as to have elasticity at an outer end, adjacent to an outlet, of a corresponding one of said bores in walls of said frames in such a direction as to extend along a direction in which said band body is inserted.

6. A continuous band assembly according to any one of claims 1 to 5, characterized in that each of said bands is formed such that a sex pheromone agent can be released by a high-molecular material having mixed therewith said sex pheromone agent.

7. A continuous band assembly according to any one of claims 1 to 5, characterized in that each of said bands is molded by a porous high-molecular material in order to be impregnated such that a sex pheromone agent can be released.

8. A continuous band assembly according to any one of claims 1 to 7, characterized in that said high-molecular material is at least any one of a photolytic plastic material and a biodegradation plastic material.

9. A method of manufacturing a continuous band assembly comprising a plurality of bands each having a web-like band body, a plurality of engaging projections provided on said band body, a frame connected to a proximal end of said band body and having a bore into which said band body is inserted, and a pair of engaging pawls provided integrally on said frame and engaged with said engaging projections of said band body which is inserted into said bore, to fasten said engaging projections so as not to come out, characterized by comprising the steps of:
successively molding said bands every units;
integrally joining an end of the unit under being molded, to an end of the unit which has been molded, but which is not yet hardened; and
continuing said plurality of said bands in a longitudinal direction.

10. A method of manufacturing a continuous band, according to claim 9, characterized in that the unit comprises a first forming part, adjacent to an proximal end, of the web-like band body having said engaging projections, which extends from a halfway in said band body to the proximal end, a frame connected to the proximal end of said band body and having a bore through which said band body is inserted, the engaging pawls provided integrally on said frame and engaged with said engaging projections of said band body which is inserted into said bore, to fasten said engaging projections so as not to come out, and a second forming part, adjacent to a forward end, of the band body of the band continuous to the adjacent band, said second forming part being connected to said frame and corresponding to an except portion of said band body, and that a proximal end of said second forming part on the forward end of the band body of the unit under being molded and one of first and second joining portions formed at the forward end of the second forming part, on the side of the proximal end, of said band body are integrally joined to the other joining portion of the unit having been molded.

11. A method of manufacturing a continuous band assembly, according to claim 9, characterized in that said unit comprises the web-like band body having the engaging projections, the frame connected to the proximal end of said band body and having the bore in which said band body is inserted, and the engaging pawls provided integrally on said frame and engaged with said engaging projections of said band body which is inserted into said bore, to fasten said engaging projections so as not to come out, wherein one of first and second joining portions formed behind said frame of the unit under being molded and at the forward end of said band body is integrally joined to the other joining portion of the unit having been molded.

12. A method of manufacturing a continuous band, according to any one of claims 10 and 11, characterized in that said unit has, between first and second joining portions, the plurality of bands under a longitudinally continuous condition, each of which is provided with the web-like band body, the engaging projection provided on said band body, the frame connected to the proximal end of said band body and having the bore into which said band body is inserted, and the engaging pawls provided integrally on said frame and engaged with said engaging projections of said band body which is inserted into said bore, to fasten said engaging projections so as not to come out, wherein one of first and second joining portions of the unit under being molded is integrally joined to the other joining portion of the unit having been molded.

13. A method of manufacturing a continuous band assembly, according to any one of claims 10 to 12, characterized in that said first and second joining portions are under an intermeshing condition.

14. An apparatus for manufacturing a continuous band assembly, characterized by comprising a plurality of bands each having a web-like band body, a plurality of engaging projections provided on said band body, a frame connected to a proximal end of said band body and having a bore into which said band body is inserted, a pair of engaging pawls provided integrally on said frame and engaging with said engaging projections of said band body which is inserted into said bore, to fasten said engaging projections so as not to come out, a common movable mold and a plurality of recirculation molds the same in configuration as each other capable of cooperating with each other for every units to integrally mold the band, moving means for moving said common movable mold so as to close and open said common movable mold, and moving means for moving said plurality of recirculation molds so as to be recirculated, to arrange two recirculation molds under a front and rear series condition in a longitudinal direction, wherein said two recirculation molds have cavities which are continuous to each other under an series arranged condition, wherein each of said cavities has, only at a single location, first and second forming parts of said first joining portion located at one end of said unit and the second joining portion located at the other end of said unit, wherein said common movable mold has a molding impeding portion which is inserted into the molding portion of one of said first and second joining portions in the cavity of a rear one of the two recirculation molds arranged under said series condition, and wherein the cavity of said common movable mold has a molding portion which cooperates with a molding portion of said one joining portion in the cavity of the recirculation mold on the front side.

15. An apparatus for manufacturing a continuous band assembly, according to claim 14, characterized in that said common movable mold and said recirculation molds comprise the first forming part, on the side of the proximal end, of the web-like band body having the engaging projections which extend from a halfway in said band body to the proximal end, the frame connected to the proximal end of said band body and having the bore in which said band body is inserted, the engaging pawls provided integrally on said frame and engaged with said engaging projections of said band body which is inserted in said bore, to fasten said engaging projection so as not to come out, and the forming part, on the side of the forward end, of the band body of the band continuous to the adjacent band, said second forming part being connected to said frame and corresponding to an except portion in said band body, wherein a unit located at the proximal end of said first forming part, adjacent to the forward end, of said band body and having the first joining portion, and a unit located at the forward end of the second forming part, adjacent to the proximal end, of said band body and having the second joining portion are successively molded.

16. An apparatus for manufacturing a continuous band assembly, according to claim 14, characterized in that said common movable mold and said recirculation molds comprise the web-like band body having the engaging projections, the frame connected to the proximal end of said band body and having the bore through which said band body is inserted, and the engaging pawls provided integrally with said frame and engaged with said engaging projections of said band body which is inserted in said bore, to fasten said engaging projection so as not to come out, wherein a unit located behind said frame and having the first joining portion, and a unit located at the forward end of the band body and having the second joining portion are successively molded.

17. An apparatus for manufacturing a continuous band assembly, according to claim 15 or 16, characterized in that said common movable mold and said recirculation molds successively mold a unit having, between the first and second joining portions, a plurality of bands under a longitudinally continuous condition, comprising the web-like band body, the engaging projections provided on said band body, the frame connected to the proximal end of said band body and having the bore into which said band body is inserted, and the engaging pawls provided integrally with said frame and engaged with said engaging projection of said band body which is inserted into said bore, to fasten said engaging projections so as not to come out,

18. An apparatus for manufacturing a continuous band, according to any one of claims 15 to 17, characterized in that said common movable mold and said recirculation molds successively mold units each having the first and second joining portions having an intermeshing configuration.
